# EUROPEAN PATENT APPLICATION

(11) **EP 4 215 035 A1**
(43) Date of publication of application: **26.07.2023**
(21) Application number: 22214779.5
(22) Date of filing: 20.12.2022
(51) Int. Cl.: A01D 34/00, A01D 34/74

(54) **MOWER**

(30) Priority: 25.01.2022 CN 202210087022
(71) Applicant: Nanjing Chervon Industry Co., Ltd., Nanjing, Jiangsu 211106 (CN)
(72) Inventor: CHEN, Haodong, Nanjing, Jiangsu, 211106 (CN); WU, Xiujian, Nanjing, Jiangsu, 211106 (CN); FU, Huixing, Nanjing, Jiangsu, 211106 (CN); HU, Jiajia, Nanjing, Jiangsu, 211106 (CN)
(74) Representative: Sun, Yiming

(57) **Abstract**

A mower includes a mowing system for cutting grass, a housing, and a traveling assembly including walking wheels. The mowing system includes a cutting assembly, a driving mechanism, and a height adjustment mechanism. The cutting assembly includes a mowing element for cutting the grass. The height adjustment mechanism is used for adjusting a movement of the cutting assembly to have different cutting heights, where the height adjustment mechanism includes an adjustment motor for generating an adjustment force for adjusting the mowing element to the different cutting heights. The mower further includes a parameter detection unit and a control unit, where the parameter detection unit is configured to detect a working parameter of the adjustment motor in a working process, and the control unit is configured to identify a cutting height of the mowing element according to the acquired working parameter.

## Description

This application claims priority to Chinese Patent Application No. CN 202210087022.0 filed on January 25, 2022, the disclosures of which are incorporated herein by reference in their entireties.

### TECHNICAL FIELD

The present application relates to garden tools and, in particular, to a robotic mower and a mower.

### BACKGROUND

A mower is one of the commonly used garden tools and is mainly used for trimming various lawns. With people's higher requirements on greening levels and the progress of science and technology, the scientific and technological content of this tool is also constantly improved and this tool develops to be more intelligent and more environmentally friendly. A robotic mower can run autonomously according to a planned path and finish cutting grass. Thus, compared with a traditional mower, the robotic mower can save a large amount of labor, reduce lawn maintenance costs, and improve labor efficiency. In addition, the robotic mower uses electrical energy and reduces repeated work because of a scientifically planned path, thereby saving energy.

At present, to achieve different mowing heights, the mowing systems of most robotic mowers can generally be moved up and down. However, an adjustment mechanism in an existing mowing system has a relatively complicated structure, resulting in a complicated structure and poor stability when a cutting height of a mowing element is adjusted.

### SUMMARY

A robotic mower includes a mowing system, a housing, and a traveling assembly. The mowing system is used for cutting grass. The housing is used for supporting the mowing system. The traveling assembly includes walking wheels for supporting the housing to drive the robotic mower to walk on the ground. The mowing system includes a cutting assembly, a driving mechanism, and a height adjustment mechanism. The cutting assembly includes a mowing element for cutting the grass. The driving mechanism includes a mowing motor for driving the cutting assembly to rotate. The height adjustment mechanism is used for adjusting a movement of the cutting assembly along a direction of a first axis to cause the mowing element to have different cutting heights, where the height adjustment mechanism includes an adjustment motor for generating an adjustment force for adjusting the mowing element to the different cutting heights. The robotic mower further includes a parameter detection unit and a control unit, where the parameter detection unit is configured to detect a working parameter of the adjustment motor in a working process, and the control unit is configured to identify a cutting height of the mowing element according to the acquired working parameter.

In an example, the working parameter includes one or more of a working current, a working voltage, and a back electromotive force of the adjustment motor.

In an example, the control unit is configured to, when the working parameter is greater than a preset parameter threshold, determine that the mowing element is in an extreme cutting position and control the adjustment motor to lower a rotational speed or stop running, where the mowing element in the extreme cutting position has an extreme cutting height.

In an example, the extreme cutting position includes an upper extreme cutting position and a lower extreme cutting position, and the robotic mower further includes a limiting portion configured to limit the mowing element between the upper extreme cutting position and the lower extreme cutting position.

In an example, the control unit is configured to calibrate a preset standard working parameter according to a working parameter of the adjustment motor when the mowing element is in the extreme cutting position, where the preset standard working parameter is an initially set working parameter of the adjustment motor when the mowing element is in the extreme cutting position.

In an example, the robotic mower further includes a control switch for controlling the adjustment motor to adjust the cutting height of the mowing element, where the control unit is configured to control a running state of the adjustment motor according to a switch state of the control switch.

In an example, the control unit is configured to, when the control switch is in a first state, output a first drive signal to control the adjustment motor to rotate in a first direction; when the control switch is in a second state, output a second drive signal to control the adjustment motor to rotate in a second direction; and when the control switch is in a third state, output a brake signal to control the adjustment motor to stop rotating.

In an example, the first direction is opposite to the second direction.

In an example, the control unit is configured to, when the cutting height of the mowing element reaches a target cutting height, control the adjustment motor to lower a rotational speed or stop running.

In an example, the control switch has a switch stroke of a preset length, where the switch stroke is positively or negatively correlated to a target cutting height.

In an example, the robotic mower further includes a storage unit for storing a historical cutting height, where the control unit is configured to control, according to the historical cutting height, the adjustment motor to adjust a present cutting height of a mowing element.

In an example, the storage unit is further configured to store preset lawn image data, where the control unit is configured to control, according to the preset lawn image data, the adjustment motor to adaptively adjust a cutting height of the mowing element such that the mowing element cuts the grass according to the preset lawn image data.

In an example, the mowing system further includes a motor cylinder and an elastic member, where the motor cylinder is movable up and down along the first axis, and the elastic member is configured to be capable of abutting against the motor cylinder.

In an example, the mowing system further includes a gearbox and an anti-rotation structure, where the gearbox is formed with an accommodation space for accommodating a height adjustment mechanism, and the anti-rotation structure is disposed between the motor cylinder and the gearbox.

In an example, the adjustment motor is a sensorless motor.

A mower includes a mowing system, a housing, and a traveling assembly. The mowing system is used for cutting grass. The housing is used for supporting the mowing system. The traveling assembly includes walking wheels for supporting the housing to drive the mower to walk on the ground. The mowing system includes a cutting assembly, a driving mechanism, and a height adjustment mechanism. The cutting assembly includes a mowing element for cutting the grass. The driving mechanism includes a mowing motor for driving the cutting assembly to rotate. The height adjustment mechanism is used for adjusting a movement of the cutting assembly along a direction of a first axis to cause the mowing element to have different cutting heights, where the height adjustment mechanism includes an adjustment motor for generating an adjustment force for adjusting the mowing element to the different cutting heights. The mower further includes a parameter detection unit and a control unit, where the parameter detection unit is configured to detect a working parameter of the adjustment motor in a working process, and the control unit is configured to identify a cutting height of the mowing element according to the acquired working parameter.

A mower includes a mowing system, a housing, and a traveling assembly. The mowing system is used for cutting grass. The housing is used for supporting the mowing system. The traveling assembly includes walking wheels for supporting the housing to drive the mower to walk on the ground. The mowing system includes a cutting assembly, a driving mechanism, and a height adjustment mechanism. The cutting assembly includes a mowing element for cutting the grass. The driving mechanism includes a mowing motor for driving the cutting assembly to rotate. The height adjustment mechanism is used for adjusting a movement of the cutting assembly along a direction of a first axis to cause the mowing element to have different cutting heights, where the height adjustment mechanism includes an adjustment motor for generating an adjustment force for adjusting the mowing element to the different cutting heights. The mower further includes a parameter detection unit and a control unit, where the parameter detection unit is configured to detect a working parameter of the adjustment motor in a working process, and the control unit is configured to identify a cutting height of the mowing element according to the acquired working parameter, where the working parameter does not include a number of revolutions of the adjustment motor.

In an example, the working parameter includes one or more of a working current, a working voltage, and a back electromotive force of the adjustment motor.

In an example, the control unit is configured to, when the working parameter is greater than a preset parameter threshold, determine that the mowing element is in an extreme cutting position and control the adjustment motor to lower a rotational speed or stop running, where the mowing element in the extreme cutting position has an extreme cutting height.

In an example, the control unit is configured to calibrate a preset standard working parameter according to a working parameter of the adjustment motor when the mowing element is in the extreme cutting position, where the preset standard working parameter is an initially set working parameter of the adjustment motor when the mowing element is in the extreme cutting position.

### BRIEF DESCRIPTION OF DRAWINGS

FIG. 1 is a structure view of a mower in an example of the present application;
FIG. 2 is a structure view of a mowing system in the mower in FIG. 1;
FIG. 3 is a diagram of a control circuit for an adjustment motor in FIG. 1;
FIG. 4 is a diagram of a control circuit for an adjustment motor in FIG. 1; and
FIG. 5 is a structure view of a mowing system in the mower in FIG. 1.

### DETAILED DESCRIPTION

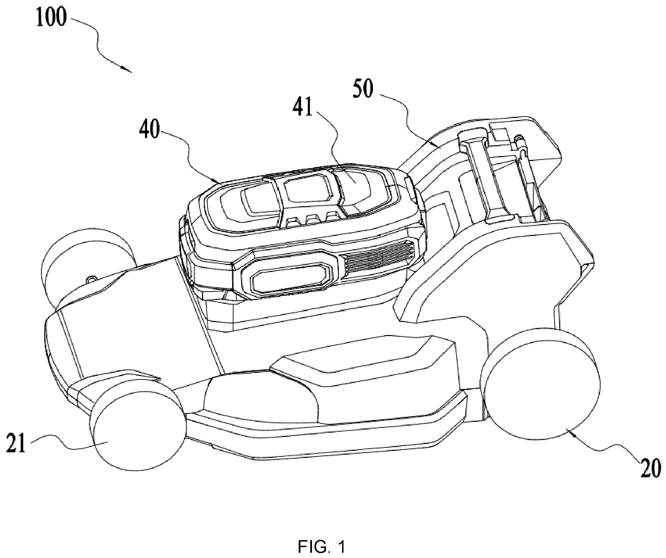

A mower 100 in an example shown in FIG. 1 is used for trimming vegetation such as lawns and weeds. In this example, the mower 100 is a robotic mower which does not need to be pushed by a user manually, and the robotic mower can automatically trim lawns without being operated by a person. Of course, it is to be understood that the mower may be a push mower. For the push mower, the user typically stands behind the push mower and manually pushes a handle of the push mower to make the push mower walk on the ground. Alternatively, the mower may be a riding mower. For the riding mower, the user sits on a seat of the riding mower to operate the riding mower to walk on the ground. In fact, as long as the essential solution of the present application described below is applicable to a mower, the mower is within the scope of the present application.

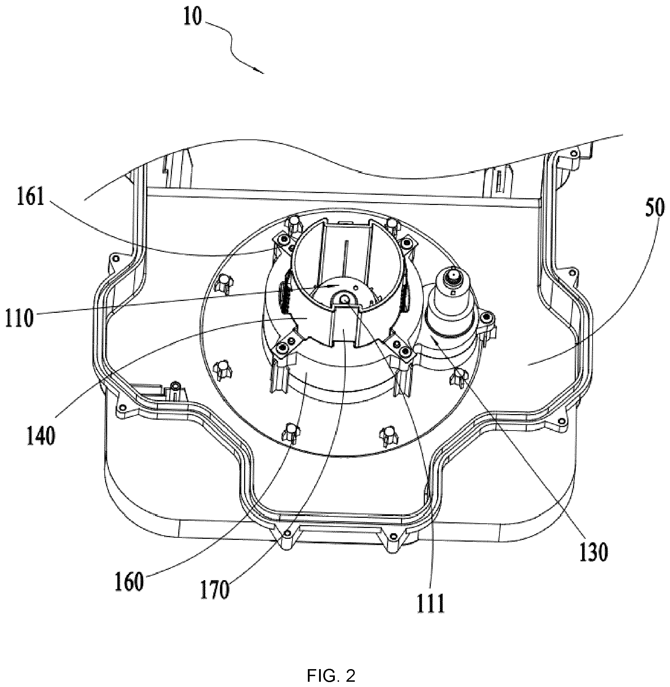

As shown in FIGS. 1 and 2, the mower 100 includes a mowing system 10, a traveling assembly 20, a control assembly, an energy source device 40, and a housing 50. The mowing system 10 is used for implementing a mowing function of the mower 100. The traveling assembly 20 includes walking wheels 21 for driving the mower 100 to walk on the ground. The control assembly is used for controlling electric equipment in the mower 100 so that the intelligent performance of the mower 100 is displayed. The energy source device 40 is used for providing an energy source for the mowing system 10, the traveling assembly 20, and the control assembly. In this example, the energy source device 40 is a power supply device, and the power supply device may include a battery pack 41 mounted to the housing 50. The housing 50 is used for carrying the mowing system 10, the power supply device 40, and a control system or a detection system in the mower. The traveling assembly 20 is mounted to the housing 50 and supports the housing 50.

In an example, as shown in FIG. 2, the mowing system 10 includes a driving mechanism 110, a cutting assembly 120, and a height adjustment mechanism 130. The driving mechanism 110 includes a mowing motor 111 for outputting power to drive the cutting assembly. The cutting assembly 120 includes a mounting shaft 121, a mowing element 122, a cutting deck 123, and a shield 124. The mowing element 122 may be one or more mowing blades mounted on the cutting deck 123. The shield 124 is mounted at a lower end of the cutting deck 123 and a lower end of the mowing element 122 so that the shied 124 can protect the mowing element 122 from being damaged. The cutting deck 123 is mounted on the mounting shaft 121 and can be driven by the mounting shaft 121 such that the mowing element 122 rotates about a first axis 101 under the action of a centrifugal force to cut grass. The shield 124 may be fixed on the mounting shaft 121 or may rotate about the mounting shaft 121, which is not limited herein.

In an implementation, a motor shaft 1111 of the mowing motor 111 and the mounting shaft 121 are disposed coaxially along a direction of the first axis 101 and rotate coaxially or at the same speed. In an example, the cutting assembly 120 may be fixed on the motor shaft 1111 of the mowing motor 111 and can be directly driven by the mowing motor 111 to cut grass.

In this example, the height adjustment mechanism 130 can adjust a height of the mowing element 122 with respect to the housing 50 in the direction of the first axis 101 such that the mowing element 122 has different cutting heights, that is, the mower 100 has different cutting heights. In an example, the height adjustment mechanism 130 may indirectly adjust a height of the cutting assembly 120 by adjusting a height of the mowing motor 111. In an example, the height adjustment mechanism 130 may directly adjust the height of the cutting assembly 120. For example, the height adjustment mechanism 130 can adjust the cutting assembly 120 so that the mowing element 122 has a first cutting height and a second cutting height. When the mowing element 122 is at the first cutting height, the mowing element 122 is relatively close to the ground so that more grass on the ground can be cut. When the mowing element 122 is at the second cutting height, the mowing element 122 is relatively far from the ground so that less grass on the ground can be cut.

In an implementation, the mowing system 10 further includes a motor cylinder 140 and a base 150 to which the motor cylinder 140 is fixed. The mowing motor 111 is partially or completely accommodated in the motor cylinder 140, and an external thread 141 is formed on a periphery of the motor cylinder 140. Optionally, the external thread 141 of the motor cylinder 140 may be a full thread or an intermittent thread. In an example, the mowing motor 111 is fixed on the base 150. The base 150 may constitute part of the housing 50 or may be disposed in an accommodation cavity formed by the housing 50. Since both the motor cylinder 140 and the mowing motor 111 may be fixed on the base 150, a relatively fixed connection relationship is formed among the motor cylinder 140, the mowing motor 111, and the base 150, that is to say, if the motor cylinder 140 can move up and down along the first axis 101, the base 150 can be driven to move up and down and the mowing motor 111 fixed on the base 150 can also be driven to move up and down along the first axis 101.

In an example, the height adjustment mechanism 130 includes at least an adjustment motor 131 and a gear assembly 132. The adjustment motor 131 drives the gear assembly 132 such that the cutting assembly 120 can be driven to move up and down along the direction of the first axis 101. Specifically, the gear assembly 132 can mesh with the external thread 141 on the motor cylinder 140 such that the rotation of the gear assembly 132 can drive the motor cylinder 140 to rotate and move along the direction of the first axis 101. In an example, the gear assembly 132 includes a driving gear 1321 and a driven gear 1322. The driving gear 1321 is disposed on a motor shaft of the adjustment motor 131 and can mesh with the driven gear 1322 to drive the driven gear 1322 to rotate. The external thread on an outer side of the motor cylinder 140 can mesh with the driven gear 1322. Thus, the rotation of the adjustment motor 131 can drive the driving gear 1321 to rotate, thereby driving the driven gear 1322 to rotate. Further, the motor cylinder 140 is driven to move up and down along the direction of the first axis 101. It can be seen from the preceding description that the motor cylinder 140 can drive the mowing motor 111 to move up and down while moving along the first axis 101. The cutting assembly 120 can be fixed on the mowing motor 111 and driven by the mowing motor 111 to cut grass. Therefore, when moving up and down, the mowing motor 111 can drive the mowing element 122 to move up and down along the first axis 101 to change a cutting height of the mowing element 122.

In an example, the adjustment motor 131 is a sensorless motor such as a sensorless brushless motor.

In this example, a control circuit for controlling a rotational state of the adjustment motor 131 can identify the cutting height of the mowing element 122 according to a working parameter of the adjustment motor 131 in a running process. The preceding working parameter may include one or more of an output current, an output voltage, and the number of revolutions of the motor. In an implementation, the control circuit may determine the cutting height of the mowing element 122 according to the number of revolutions of the adjustment motor 131 and a rotation direction of the adjustment motor 131. For example, when the adjustment motor 131 rotates in a first direction, the greater the number of revolutions, the higher the cutting height of the mowing element 122; and when the adjustment motor 131 rotates in a second direction opposite to the first direction, the greater the number of revolutions, the lower the cutting height of the mowing element 122.

In an implementation, the preceding control circuit can also determine that the mowing element 122 is in an extreme cutting position according to the working parameter of the adjustment motor 131 in the running process. The so-called extreme cutting position may be a cutting position in which the mowing element 122 has a lowest cutting height or a highest cutting height in the direction of the first axis 101. That is, the mowing element 122 may have an upper extreme cutting position and a lower extreme cutting position. In this example, a limiting portion is disposed on the motor cylinder 140, the base 150, or the housing 50 and can limit the cutting height of the mowing element 122 between the upper extreme cutting position and the lower extreme cutting position, thereby avoiding damages to parts of the mower caused by the excessive adjustment of the cutting height of the mowing element 122. In an example, an upper limiting portion 142 which limits the upper extreme cutting position is disposed above the external thread 141 of the motor cylinder 140. In an example, a lower limiting portion 151 which limits the lower extreme cutting position is disposed on the base 150 or is an integral part of the base 150. In an implementation, when the adjustment motor 131 drives the motor cylinder 140 to move up and down such that the mowing element 122 is in the extreme cutting position, due to the limitation of the limiting portion, the motor cannot drive the motor cylinder 140 to continue moving though the motor continues rotating. Therefore, the working parameter of the adjustment motor 131 changes suddenly, for example, a working current of the motor or a working voltage of the motor increases suddenly. In an example, when the control circuit detects that the working parameter of the adjustment motor 131 is greater than a preset parameter threshold, the control circuit may determine that the mowing element 122 is at an extreme cutting height and can control the adjustment motor 131 to brake, for example, control the motor 131 to lower a rotational speed or to stop running. That is to say, the adjustment motor 131 can automatically stop after adjusting the cutting height of the mowing element 122 to the extreme cutting height.

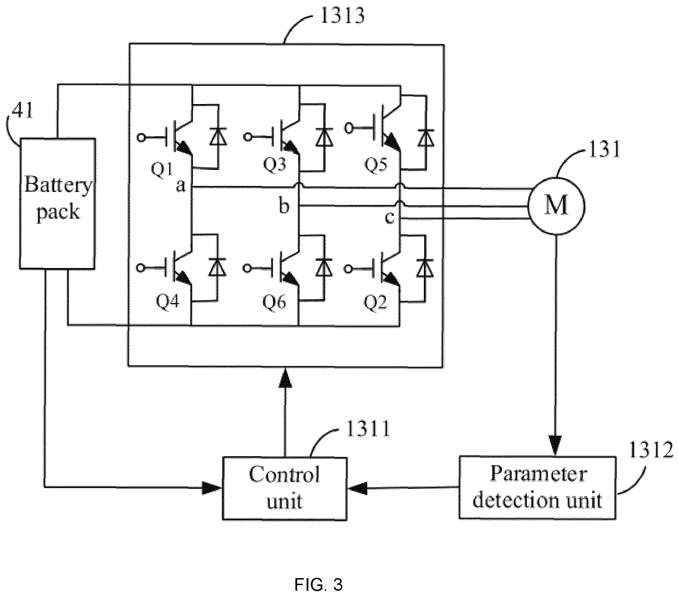

In an example, as shown in FIG. 3, the control circuit for the adjustment motor 131 includes at least a control unit 1311, the adjustment motor 131, a parameter detection unit 1312, a driver circuit 1313, and the battery pack 41. The adjustment motor 131 is the sensorless motor and cannot directly detect the cutting height of the mowing element 122 or the number of revolutions of the motor. The parameter detection unit 1312 can detect the working parameter of the motor 131, for example, the working parameter of the motor 131 includes the working current, the output voltage, a back electromotive force, and the like of the motor. In an example, the parameter detection unit 1312 may be a specific hardware device such as a sampling resistor or may be a software program.

The driver circuit 1313 is electrically connected to stator windings A, B, and C of the adjustment motor 131 and used for transmitting a current from the battery pack 41 to the stator windings A, B, and C to drive the adjustment motor 131 to rotate. In an example, the driver circuit 1313 includes multiple switching elements Q1, Q2, Q3, Q4, Q5, and Q6. A gate terminal of each switching element is electrically connected to the control unit 1311 and used for receiving a control signal from the control unit 1311, where the control signal may be a pulse-width modulation (PWM) signal. A drain or a source of each switching element is connected to the stator windings A, B, and C of the adjustment motor 131. The switching elements Q1 to Q6 receive control signals from the control unit 1311 to change respective conduction states, thereby changing currents loaded on the stator windings A, B, and C of the adjustment motor 131 by the battery pack 41. In an example, the driver circuit 1313 may be a three-phase bridge driver circuit including six controllable semiconductor power devices (such as field-effect transistors (FETs), bipolar junction transistors (BJTs), or insulated-gate bipolar transistors (IGBTs)). It is to be understood that the preceding switching elements may be any other types of solid-state switches such as the insulated-gate bipolar transistors (IGBT) or the bipolar junction transistors (BJT). To drive the adjustment motor 131 shown in FIG. 3 to rotate, the driver circuit 1313 has multiple driving states, and in different driving states, the adjustment motor 131 may have different rotational speeds or different rotation directions. In the present application, the process is not described in detail where the control unit 1311 controls the driver circuit 1313 to change the different driving states such that the adjustment motor 131 obtains the different rotational speeds or the different rotation directions.

In an example, the control unit 1311 may acquire the working parameter of the adjustment motor 131 detected by the parameter detection unit 1312 and may identify a present cutting height of the mowing element 122 according to the acquired working parameter. In an implementation, the control unit 1311 may identify a cutting height of the mowing element 122 at any moment according to the acquired working parameter of the adjustment motor 131 and a preset standard working parameter of the adjustment motor 131. The preset standard working parameter is an initially set working parameter of the adjustment motor 131 when the mowing element 122 is in the extreme cutting position. For example, the control unit 1311 may calculate the number of revolutions of the motor according to the back electromotive force of the adjustment motor, each revolution of the motor corresponds to a constant movement distance of the mowing element 122 in the direction of the first axis 101, and therefore, the change of the cutting height of the mowing element 122 may be determined according to the number of revolutions of the motor 131. If the number of revolutions of the motor corresponding to the extreme cutting height of the mowing element 122 in the extreme cutting position is used as a standard number of revolutions, the control unit 1311 may determine a present actual cutting height of the mowing element 122 according to the actually detected number of revolutions of the motor and the standard number of revolutions. For example, a factory setting of the mower 100 is that when the mowing element 122 is in the upper extreme cutting position, the number of revolutions of the adjustment motor is 1000 rpm. Therefore, when it is detected that the actual number of revolutions of the adjustment motor 131 is 1000 rpm, the control unit 1311 determines that the mowing element 122 is in the upper extreme cutting position.

However, as the mower 100 is used for a longer time, an error may occur between the working parameter of the adjustment motor 131 when the mowing element 122 is in the extreme cutting position and the preset standard working parameter, thereby affecting the accuracy with which the cutting height is identified. For example, a movement height of the mowing element 122 corresponding to each revolution of the motor may change, and therefore, the preceding standard number of revolutions needs to be periodically calibrated, so as to ensure that the cutting height of the mowing element 122 can be accurately identified. A specific calibration manner may be to periodically update the preset standard working parameter according to the actually detected working parameter.

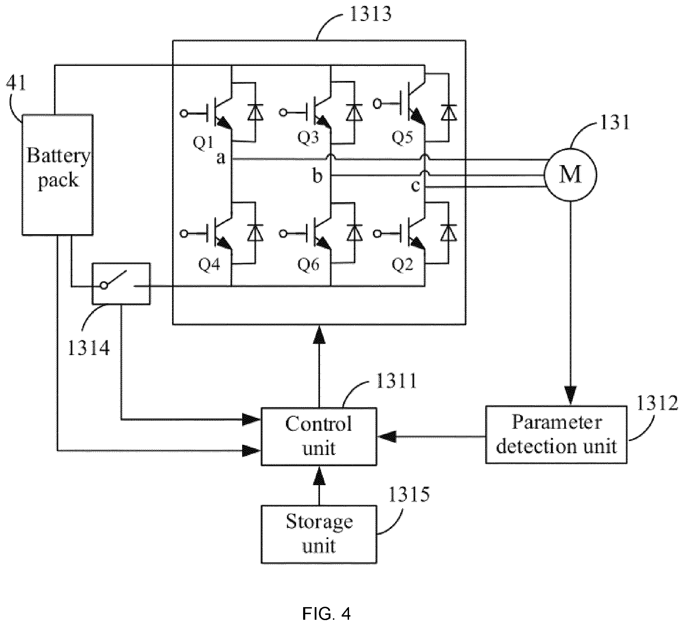

In an example, as shown in FIG. 4, a control switch 1314 may also be included in the control circuit. The control switch 1314 may be operated by the user to control the adjustment of the cutting height of the mowing element 122. The control switch 1314 may be disposed in any position of the mower 100 where the control switch 1314 is convenient for the user to operate. In an implementation, when the user turns on the control switch 1314, the control circuit shown in FIG. 3 is energized and the control unit 1311 can output a drive signal to control the adjustment motor 131 to rotate, so as to adjust the cutting height of the mowing element 122; and when the user turns off the control switch 1314, the control circuit shown in FIG. 3 is de-energized and the control unit 1311 can output a brake signal to control the adjustment motor 131 to stop rotating, or the control unit 1311 can stop outputting the drive signal and the adjustment motor 131 can brake by inertia.

In an example, the control switch 1314 may correspond to multiple operation states. For example, when the user operates the control switch 1314 to a first state, the control unit 1311 outputs a first drive signal to control the adjustment motor 131 to rotate in the first direction so that a mowing height of the mowing element 122 is increased; when the user operates the control switch 1314 to a second state, the control unit 1311 outputs a second drive signal to control the adjustment motor 131 to rotate in the second direction so that the mowing height of the mowing element 122 is reduced; and when the user operates the control switch 1314 to a third state, the control unit 1311 outputs the brake signal to control the adjustment motor 131 to stop running so that the mowing element 122 can maintain the present cutting height.

In an example, the control switch 1314 may be any element capable of implementing the preceding functions, such as a membrane switch, an electronic switch, or a mechanical switch.

In an example, the control unit 1311 may also control a rotational state of the mowing motor 111 to control the mowing element 122 to cut grass. In an example, in the process of controlling the mowing motor 111 to rotate, the control unit 1311 may control the adjustment motor 131 to adjust the cutting height of the mowing element 122. In an implementation, the mowing motor 111 may be controlled by a mowing circuit thereof and a control unit in the mowing circuit may communicate with the preceding control unit 1311 so that the cutting height of the mowing element 122 can be adjusted while the mowing motor 111 is cutting grass. For example, the control unit 1311 may adaptively adjust the cutting height of the mowing element 122 according to operation requirements of the user or vegetation characteristic data detected by a vegetation detection sensor. For example, when the vegetation detection sensor detects that grass in an area to be mowed is relatively high, the control unit 1311 may control the adjustment motor 131 to change the rotational state so that the present cutting height is reduced. The operation requirements of the user may be input into the mower 100 through switch states of the control switch 1314 or the adjustment of a switch stroke. The vegetation detection sensor may be disposed in any position of the mower 100 and can detect characteristic data of the grass to be cut, such as a length, density, and species of the grass. The vegetation detection sensor may be an image sensor, a radar, an infrared sensor, a camera, or the like.

In an example, in the process where the control unit 1311 controls the mowing motor 111 to rotate, when it is detected that the control switch 1314 is turned on, the control unit 1311 may control the mowing motor 111 to suspend cutting grass, control the adjustment motor 131 to adjust the cutting height of the mowing element 122, and control the mowing motor 111 to start cutting grass after the cutting height reaches a target cutting height. It is to be understood that in the process where the control unit 1311 adjusts the cutting height of the mowing element 122, the cutting height of the mowing element 122 may be identified in real time according to the working parameter of the adjustment motor 131 so that when the mowing height reaches the target cutting height, the adjustment motor 131 can be accurately controlled to brake. The target cutting height may be set through the control switch 1314, for example, the control switch 1314 is a toggle switch or a knob switch having a certain switch stroke, where different switch strokes correspond to different target cutting heights. For example, the shorter the switch stroke of the control switch 1314, the lower the corresponding target cutting height, and vice versa. Alternatively, the shorter the switch stroke of the control switch 1314, the higher the corresponding target cutting height, and vice versa.

In an example, the mower 100 further includes a storage unit 1315 capable of storing a historical cutting height of the mower 100. When the mower 100 is turned on and starts working, the control unit 1311 may control the adjustment motor 131 to adjust the cutting height of the mowing element 122 to a cutting height before the mower 100 is turned off or to a most frequently used historical cutting height.

In an example, the control unit 1311 may also perform user self-learning according to all historical cutting heights stored in the storage unit 1315 and historical state data of the grass to be cut detected by the vegetation detection sensor. Thus, the mower 100 can adaptively adjust the cutting height of the mowing element 122 according to a present state of the grass to be cut detected by the vegetation detection sensor.

To trim a lawn into different shapes, it is necessary to constantly adjust the cutting height of the mowing element 122 during trimming. For example, to trim the lawn into a number "2022", a height of grass making up the number "2022" is different from a height of other parts of grass. In an example, the storage unit 1315 may store a preset lawn image for a lawn to be trimmed, and the control unit 1311 may automatically adjust, according to the preceding preset lawn image, the cutting height of the mowing element 122 in the process where the mower 100 cuts grass such that the mower 100 autonomously cuts the grass on the lawn to form a pattern in the preset lawn image.

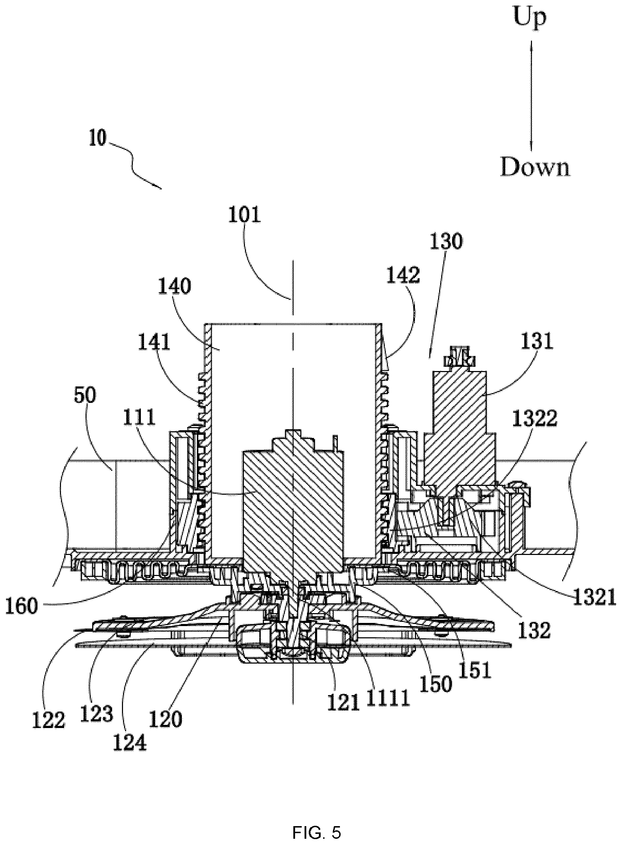

In an example, as shown in FIG. 5, the mowing system 10 further includes a gearbox 160. The gearbox 160 can be formed with an accommodation space for accommodating the preceding height adjustment mechanism 130. An elastic member 161 capable of abutting against the motor cylinder 140 is mounted on the gearbox 160. When the motor cylinder 140 moves along the direction of the first axis 101, the elastic member 161 can reduce the vibration of the motor cylinder 140, thereby reducing noise. In an implementation, the elastic member 161 may be mounted on the base 150, and one end of the elastic member 161 can abut against the motor cylinder 140 so that when the motor cylinder 140 moves along the direction of the first axis 101, the vibration of the motor cylinder 140 is reduced, thereby reducing the noise. In an example, the elastic member 161 is a spring tab.

In an example, a gasket is disposed at a lower end of the driven gear 1322 and used for reducing a frictional force between the driven gear 1322 and the base 150 or a lower housing 50. Optionally, the gasket is a metal gasket.

In an example, an anti-rotation structure 170 is disposed between the gearbox 160 and the motor cylinder 140. The anti-rotation structure 170 may assist the motor cylinder 140 in moving up and down along the direction of the first axis 101 and may prevent the motor cylinder 140 from rotating about the direction of the first axis 101. In an example, the anti-rotation structure 170 may also assist in calibrating circumferential positions of the motor cylinder 140, the mowing motor 111, and the mowing element 122.

In the example of the present application, as long as the height adjustment mechanism 130 includes a sensorless adjustment motor, the preceding control circuit may be adopted to identify or adjust the cutting height of the mowing element 122. That is to say, a position where the adjustment motor 131 in the height adjustment mechanism 130 is mounted and a manner in which the adjustment motor 131 cooperates with other adjustment assemblies to control the mowing element 122 and adjust the cutting height are not limited in the example of the present application.

In an example, a relative position of the mowing motor 111 in the mower 100 is not changed, that is, the mowing motor 111 does not change its position in the process where the cutting height of the mowing element 122 is adjusted. Thus, the vibration of the mowing motor 111 caused by the movement can be reduced to a certain extent, thereby ensuring mowing performance. A mounting position of the mowing motor 111, a mounting manner of the mowing motor 111, and the process where the height adjustment mechanism 130 adjusts the cutting height of the mowing element 122 are not described in detail herein.

The basic principles, main features, and advantages of the present application are shown and described above. It is to be understood by those skilled in the art that the preceding examples do not limit the present application in any form, and all technical solutions obtained by means of equivalent substitutions or equivalent transformations fall within the scope of the present application.

## Claims

1. A mower, comprising:
a mowing system (10) for cutting grass;
a housing (50) for supporting the mowing system; and
a traveling assembly (20) comprising walking wheels (21) for supporting the housing to drive the mower to walk on the ground;
wherein the mowing system comprises:
a cutting assembly (120) comprising a mowing element (122) for cutting the grass;
a driving mechanism (110) comprising a mowing motor (111) for driving the cutting assembly to rotate; and
a height adjustment mechanism (130) for adjusting a movement of the cutting assembly along a direction of a first axis (101) to cause the mowing element to have different cutting heights;
wherein the height adjustment mechanism comprises:
an adjustment motor (131) for generating an adjustment force for adjusting the mowing element to the different cutting heights; and
wherein the mower further comprises:
a parameter detection unit (1312) configured to detect a working parameter of the adjustment motor in a working process; and
a control unit (1311) configured to identify a cutting height of the mowing element according to the acquired working parameter.

2. The mower according to claim 1, wherein the working parameter comprises one or more of a working current, a working voltage, and a back electromotive force of the adjustment motor.

3. The mower according to claim 1, wherein the control unit is configured to, when the working parameter is greater than a preset parameter threshold, determine that the mowing element is in an extreme cutting position and control the adjustment motor to lower a rotational speed or stop running, wherein the mowing element in the extreme cutting position has an extreme cutting height.

4. The mower according to claim 3, wherein the extreme cutting position comprises an upper extreme cutting position and a lower extreme cutting position, and the mower further comprises a limiting portion configured to limit the mowing element between the upper extreme cutting position and the lower extreme cutting position.

5. The mower according to claim 3, wherein the control unit is configured to calibrate a preset standard working parameter according to a working parameter of the adjustment motor when the mowing element is in the extreme cutting position, wherein the preset standard working parameter is an initially set working parameter of the adjustment motor when the mowing element is in the extreme cutting position.

6. The mower according to claim 1, further comprising:
a control switch for controlling the adjustment motor to adjust the cutting height of the mowing element, wherein the control unit is configured to control a running state of the adjustment motor according to a switch state of the control switch.

7. The mower according to claim 6, wherein the control unit is configured to, when the control switch is in a first state, output a first drive signal to control the adjustment motor to rotate in a first direction; when the control switch is in a second state, output a second drive signal to control the adjustment motor to rotate in a second direction opposite to the first direction; and when the control switch is in a third state, output a brake signal to control the adjustment motor to stop rotating.

8. The mower according to claim 1, wherein the control unit is configured to, when the cutting height of the mowing element reaches a target cutting height, control the adjustment motor to lower a rotational speed or stop running.

9. The mower according to claim 6, wherein the control switch has a switch stroke of a preset length, wherein the switch stroke is positively or negatively correlated to a target cutting height.

10. The mower according to claim 1, wherein the mower is a robotic mower comprising a storage unit (1315) for storing a historical cutting height, wherein the control unit is configured to control, according to the historical cutting height, the adjustment motor to adjust a present cutting height of the mowing element.

11. The mower according to claim 10, wherein the storage unit is further configured to store preset lawn image data, wherein the control unit is configured to control, according to the preset lawn image data, the adjustment motor to adaptively adjust a cutting height of the mowing element such that the mowing element cuts the grass according to the preset lawn image data.

12. The mower according to claim 1, wherein the mowing system further comprises a motor cylinder (140) and an elastic member (161), wherein the motor cylinder is movable up and down along the first axis, and the elastic member is configured to be capable of abutting against the motor cylinder.

13. The mower according to claim 12, wherein the mowing system further comprises a gearbox (160) and an anti-rotation structure (170), wherein the gearbox is formed with an accommodation space for accommodating the height adjustment mechanism, and the anti-rotation structure is disposed between the motor cylinder and the gearbox.

14. The mower according to claim 1, wherein the adjustment motor is a sensorless motor.

15. The mower according to claim 1, wherein the mower is a robotic mower.
